# EUROPEAN PATENT SPECIFICATION

(11) **EP 2 027 779 B1**
(45) Date of publication and mention of the grant of the patent: **28.03.2012**
(21) Application number: 08252560.1
(22) Date of filing: 28.07.2008
(51) Int. Cl.: A23L 1/03, B65D 51/00

(54) **Packaging method and corresponding covers for hydrogen-reduced water or food production**
Verpackungsverfahren und zugehörige Verschlüsse für Wasserstoff-reduziertes Wasser oder Lebensmittel-produktion
Methode d'emballage et couvercles correspondants pour la production d'aliments ou d'eau réduits par l'hydrogène

(30) Priority: 27.07.2007 JP 2007195460
(43) Date of publication of application: 25.02.2009
(73) Proprietor: Isao, Yokoyama, Kohnan-ku Yokohama-shi, Kanagawa (JP)
(72) Inventor: Isao, Yokoyama, Kohnan-ku Yokohama-shi, Kanagawa (JP)
(74) Representative: Golding, Louise Ann

(56) References cited:
- GB-A- 2 255 555
- KR-A- 20050 018 776
- US-A1- 2005 224 996
- US-A1- 2007 148 256

## Description

### [Technical field]

This invention is about filling and capping process of the highly airtight vessel for food and the capping method and its caps for getting the hydrogen-reduced food (including water and beverages).

### [Background technology]

The ingested food is burnt by the oxygen breathed into the body by the lung in order to maintain the metabolizing process and maintain the life. But the burning has the oxidation effect and the active oxygen generated in the burning may has the side effect on the human body. This phenomenon has drawn the attention. The active oxygen can play a active role in the body such as transferring the information in the cell, killing the bacteria in the body via oxidization, etc., but on the other hand, if too much active oxygen is generated in the body, it can harm the DNA (genetic gene) and become the key factor inducing the adulthood diseases and life-style related diseases including cancer, etc. The human body has the function of generating the SOD (superoxide dismutase) to remove off the excessive active oxygen. This SOD generation capacity reaches its peak at the age of 20 and then declines year by year and becomes only half of the peak at 40 years old, resulting in the increasing occurrence rate of the adulthood diseases and life-style related diseases with aging. The above diseases are 90% influenced by the active oxygen so it becomes very important to find out how to supplement SOD whose level declines year after year to prevent the adulthood diseases and life-style related diseases. The applicant of this invention focuses on the functions that the hydrogen and carbon have in this regard.

Hydrogen is the richest element in the universe. On the earth it exists in water, organic compounds, etc. as a constituent element. Hydrogen is very light and can burn (explode) in the air but not giving CO₂ (carbon dioxide) and has become an eye-catching clean energy source in this century. The substance's oxidizing ability is numerically represented as ORP (oxidation-reduction potential), the bigger the positive value the stronger the oxidizing power, and the smaller the negative value the stronger the reducing power (giving out the oxygen gas) . The hydrogen has strong reducing ability with its inherent value at -420mV so if being delivered into the body, it can reduce and neutralize the above-mentioned active oxygen into water to make the active oxygen harmless. In recent years, the reducing ability of the hydrogen element draws the attention and the healthcare hydrogen-reduced water and its preparation device have been developed by dissolving the hydrogen gas into the water (patent no. 3606466, patent publication No.2002 -301483). Because the hydrogen gas is difficult to dissolve in the water, and the hydrogen-reduced water will contact the air in very short capping time after it is filled into the vessel, and the residual air in the upper space in the vessel can also oxidize the capped hydrogen-reduced water with time, all these will weaken its reducing ability.

Besides, there is a large amount of carbon in the universe and on the earth and it widely exists in the atmosphere and the ocean in form of compound. The carbon element can be extracted in form of single substance or compound and it is said that it can be extracted from more than 1,000 kinds of substances. The carbon and hydrogen are both the essential elements to the human life. They exist in protein, sugar, nucleic acid, amino acids, fat, etc. They can't be digested and assimilated by the intestines even after they are taken into the body and finally excreted with stool. The carbon is porous with a very large surface area, which can effectively absorb the odor molecules and coloring matter's molecules so it has long been used as deodorant and de-coloring agent. Normally, the surface area per gram of active carbon is 1000 to 2500 square meters and can absorb 1000 to 2000 ml hydrogen gas under normal conditions. If the carbon can be used as hydrogen carrier in the food industry, we can get the food with strong reducing ability.
[Patent literature 1] Patent no. 3606466
[Patent literature 2] Patent publication 2002-301483
KR 2005 0018776 describes a hydrogen reduction cartridge when is used to produce, carry or preserve hydrogen reduced water.

### [Disclosure of invention]

### [Purpose of the invention]

Therefore, according to the above points, the inventor intends to use the carbon to absorb the hydrogen and then carbon absorbing the hydrogen is to be ingested into the body. Because the hydrogen gas is very light, it can't deeply diffuse into the intestinal tract even if directly drinking the hydrogen-reduced water with the dissolved hydrogen. So the research topic may be based on the concept of taking the carbon as carrier of the hydrogen and let it absorb the hydrogen first and then mixing the carbon absorbing the hydrogen into the food so that enough hydrogen is ingested and deeply released into the intestinal tract to reduce the active oxygen level. This invention is about the capping method for getting the hydrogen-reduced water or hydrogen-reduced food and its corresponding caps.

### [Means for solving the above research issues ]

This invention gives the following capping methods for getting the hydrogen-reduced water or hydrogen-reduced food and its corresponding caps as means to solve the above research issues.

Claim 1 of this invention is a capping method for getting the hydrogen-reduced water or hydrogen-reduced food, characterized by that: a plurality of caps attached with the carbon fine particles inside are loaded into the cap catcher in the hydrogen gas atmosphere, after the water or food transferred from the storage tank is filled into the highly airtight vessel by the filling machine, the hydrogen gas or water vapor or both hydrogen gas and water vapor are blown into the above highly airtight vessel to purge the gas existing in the upper space of the vessel when capping and packaging with the above caps.

Claim 2 of this invention is a capping method for getting the hydrogen-reduced food, characterized by that: a plurality of caps attached with the carbon fine particles inside are loaded into the cap catcher in the hydrogen gas atmosphere, after the processed food transferred from the storage tank is filled into the highly airtight vessel by the filling machine, the hydrogen gas or water vapor or both hydrogen gas and water vapor are blown into the above highly airtight vessel to purge the gas existing in the upper space of the vessel when capping and packaging with the above caps.

Claim 3 is a capping method for getting the hydrogen-reduced water or hydrogen-reduced food described in Claim 1 and Claim 2, characterized by that the above-mentioned water or food is pressed into the filling machine from the storage tank by the hydrogen gas.

Claim 4 of this invention is a capping method for getting the hydrogen-reduced food, characterized by that: a plurality of caps attached with the carbon fine particles and flavoring inside are loaded into the cap catcher in the hydrogen gas atmosphere, after the processed or unprocessed food transferred from the storage tank is filled into the highly airtight vessel by the filling machine, the hydrogen gas or water vapor or both hydrogen gas and water vapor are blown into the above highly airtight vessel to purge the upper space of the vessel when capping and packaging with the above caps.

Claim 5 of this invention is a capping method for getting the hydrogen-reduced food, characterized by that: a plurality of caps attached with the carbon fine particles and processed food or unprocessed food inside are loaded into the cap catcher in the hydrogen gas atmosphere, after the water or one kind of alcoholic cooking liquid or both water and one kind of alcoholic cooking liquid are filled into the highly airtight vessel, the hydrogen gas or water vapor or both hydrogen gas and water vapor are blown into the above highly airtight vessel to purge the upper space of the vessel when capping and packaging with the above caps.

Claim 6 of this invention is a capping method for getting the hydrogen-reduced food described in Claim 5, characterized by that: in addition to the above carbon fine particles and processed food or unprocessed food, the above cap is attached with the flavorings.

Claim 7 of this invention is a capping method for getting the hydrogen-reduced food, characterized by that: a plurality of caps attached with carbon fine particles and processed dry food are loaded into the cap catcher in the hydrogen gas atmosphere and the capping is done with the above caps. When capping, the hydrogen gas or water vapor or both are blown into the above highly airtight vessel to purge the upper space of the highly airtight vessel.

In a capping method for getting the hydrogen-reduced food, accordingto the invention the above carbon fine particles absorb the hydrogen in advance or the hydrogen is absorbed when closing the vessel.

A further aspect of the invention relates to a cap as claimed in claim 8.

Claim 9 of this invention is a capdescribed in Claim 8, characterized by that: in addition to the above carbon fine particles, the above cap is also attached with the processed food or unprocessed food or both.

Claim 10 of this invention is about the capping method and caps for getting the hydrogen-reduced food as described in Claim 4 to 7 and Claim 9, characterized by that: the above-mentioned flavoring and processed food or unprocessed food as well as carbon fine particles in the freeze-dried state are all attached to the inside of the cap.

### [Results of the invention]

In Claim 1 and Claim 2, the carbon fine particles attached inside the cap absorb a large amount of hydrogen. After capping, the above carbon fine particles can release the hydrogen into the water or processed food in the highly airtight vessel. So after the production operation, sufficient hydrogen gas will be dissolved into the water or processed food. Besides, when capping and packaging after the food is filled, it's possible to introduce the hydrogen gas or water vapor or both from the upper port of the highly airtight vessel to drive out the oxygen gas inside so that the capping can be done in the hydrogen gas atmosphere. The hydrogen gas including that released from the above carbon fine particles can fully dissolve into the water or processed food capped in the vessel and so the high performance hydrogen-reduced water or hydrogen-reduced food is gotten. As the hydrogen gas is difficult to dissolve in the water, it's possible to enclose the hydrogen gas so that it dissolves into the capped water or food, i.e., let the hydrogen gas contact the water or processed food filled in the vessel. Because of insolubility of the hydrogen gas, there is not sufficient dissolved hydrogen gas. However, this invention can release the hydrogen into the enclosed vessel filled with water or processed food so that the hydrogen can fully dissolve in the enclosed vessel. The water or processed food that can't get enough hydrogen in conventional way can get the dissolved hydrogen in this way. It can increase the dissolved hydrogen quantity in the food to the maximum dissolving quantity in one liter of water. In fact, the dissolved hydrogen quantity varies with the applied pressure.

It is also described in Claim 1 and Claim 2 that, when a large quantity of carbon fine particles absorbing the hydrogen are ingested together with the above water or food with the hydrogen dissolved in it, they can truly bring the hydrogen to the intestinal tract deeply. Because the dissolved hydrogen in the water or food begin diffusing instantly when the vessel is opened, the reducing ability of the conventional hydrogen-reduced water decreases before the water or processed food is delivered to the deep part of the intestinal tract. But in this invention, the above fine particles fully absorb the hydrogen and are delivered to the deep part of the intestinal tract under the pre-condition of protecting the hydrogen in order to reduce and neutralize the active oxygen in the intestine to make it harmless. In the meantime, the carbon will not be digested and assimilated but excreted with stool, harmless to human body. In this way, the dissolved hydrogen in the water or food together with the large quantity of hydrogen (carbon-hydrogen) attached to the carbon fine particles can reduce and neutralize the active oxygen to generate the water. This means that it can inhibit the acidifying of the water or processed food and extend the shelf life of the water or food and preserve the water or food in high quality state for a long time. Additionally, the capping methods described in Claim 1 and Claim 2 can simply assembled onto the conventional process line to use the existing equipment to manufacture the hydrogen-reduced water or hydrogen-reduced food.

As described in Claim 3, the water or food is pressed from the storage tank to the filling machine by the hydrogen gas and the water or food can be transferred in the hydrogen gas atmosphere before purging of the highly airtight vessel. In this way, it can increase the hydrogen dissolving efficiency in the water or food.

As described in Claim 4, the cap absorbing the carbon fine particles and the flavorings inside is placed on the cap catcher in the hydrogen gas atmosphere. In this way, not only carbon fine particles but also the flavorings can absorb the hydrogen. So after the highly airtight vessel filled with the food is capping with the above cap, both the carbon fine particles and flavoring can release the hydrogen. This also increases the dissolving efficiency of the hydrogen into the food. As mentioned above, when opening the vessel, the hydrogen begins diffusing instantly and the hydrogen absorbed in the flavoring diffuse and its reducing ability is weakened, but a large quantity of hydrogen absorbed on the large surface area of the carbon fine particles can be delivered to the deep part of the intestinal tract. Besides, when capping the highly airtight vessel filled with the food, the hydrogen gas or water vapor of both are blown into the above vessel and the oxygen left in the upper space of the vessel is purged out. This increases the dissolving efficiency of the hydrogen into the food in the highly airtight vessel and increases its reducing power and so the hydrogen-reduced food against the decaying is gotten.

As described in Claim 4, the invention is also characterized by that: as the cap is attached with flavorings inside, if the unprocessed food is filled in the highly airtight vessel, the feed proportioning or flavoring may be done after the capping of the vessel. That means that the food filled in the highly airtight vessel is unprocessed and is heated at the preparing stage. When the food filled in the highly airtight vessel is unprocessed, it can be prepared at the stage of sterilizing with the omission of the conventional indispensable heating process. This is an epoch-marking result. If the unprocessed food is crab meat and the soy sauce, salt, etc. are taken as flavorings, fill all the required feed such as water, etc. into the highly airtight vessel, and cap the vessel while purging it. At the heat sterilizing stage, the boiling water mentioned above is mixed with the flavorings absorbed inside the cap so the above crab meat is prepared in the vessel automatically. In addition, if filling with the processed crab meat and using the spice as flavoring, can mix them at the heat sterilizing stage to prepare the food. In the meantime, as mentioned above, the hydrogen being absorbed in the carbon fine particles and flavorings will be released and the air inside the vessel will be purged off, the food inside the vessel will be prepared under the oxygen-free condition and the hydrogen will be fully dissolved to make the food with strong reducing capacity that doesn't not easily decay.

In addition, when the food filled in the highly airtight vessel is unprocessed (raw tea used for black tea), both the raw tea packed in the small filter paper bag and the water are filled into the vessel, and the vessel is purged while capping. At the heat sterilizing stage, the boiling water above mentioned is mixed with the above raw tea and then the above raw tea used for the black tea can be extracted. By this time, the flavoring attached to the inside of the cap is mixed with the above boiled water. If sand sugar or milk is used as flavoring, the sand sugar or milk will be mixed with the above water for flavoring at the same time when the black tea is extracted. Besides, when the food filled in the highly airtight vessel is processed raw tea for the black tea, the black tea water extracted is re-filled into the highly airtight vessel. If there is no mixture of sand sugar and milk or sand sugar or milk, can attach them to the inside of the cap as flavoring in advance, and in this way, to prepare the food by mixing with the black tea water made of the boiled water. Like this, the cap absorbs the flavoring inside in advance, especially when the unprocessed food is capped in the highly airtight vessel, the food can also be prepared during the heat sterilizing process. Conventionally, the heat sterilization is an essential process in preparing the beverage, canned food, etc. but this invention can omit this process. This is an epoch-marking result.

The combination of the carbon fine particles and processing or unprocessed food adsorbed to the inside of the cap as described in Claim 5 and Claim 6, and the combination of the carbon fine particles and flavorings adsorbed to the inside of the cap as described in Claim 4.In this invention, in addition to the carbon fine particles, the processed or unprocessed food is also absorbed to the cap, and in the hydrogen gas atmosphere, the cap is loaded onto the cap catcher. This makes not only the carbon fine particles but also the processed or unprocessed food adsorb the hydrogen. So after the food is filled in the highly airtight vessel, when capping the vessel, blow the hydrogen gas or water vapor or both into the upper port part to purge the air off so that both carbon fine particles and food are completely capped in the vessel in the hydrogen gas atmosphere. The result is that, as mentioned above, the hydrogen can fully dissolve into the food and we can get the hydrogen-reduced food with strong reducing capacity against decaying.

The invention as described in Claim 5 and Claim 6 is characterized by that: the processed or unprocessed food is absorbed to the inside of the cap. The food can be prepared by seasoning and flavor treating as the highly airtight vessel is filled with water or alcoholics or flavoring liquid. That means that, the processed food is absorbed to the inside of the cap and is heated at the preparing stage, while if the unprocessed food is absorbed to the inside of the cap and is capped after filled into the highly airtight vessel and can be prepared while sterilizing. This omits the conventional indispensable heat sterilization. This is an epoch-marking result. For example, for the unprocessed food (crab meat) , use the soy sauce, mirin, etc. as flavoring liquid and fill them in the highly airtight vessel. When capping, purge the air off the vessel and at the heat sterilization stage, mix with the boiled flavoring liquid. The crab meat adsorbed to the inside of the cap can be prepared by the seasoning in the capping state. In addition, if the crab meat adsorbed to the inside of the cap is processed, fill the water or oil, etc. as flavoring into the highly airtight vessel. They can be boiled and mixed during the heat sterilization process so the above crab meat can also have the flavor treating. As mentioned above, the result is that, with the purging effect, both the carbon fine particles and food are well enclosed in the vessel in the hydrogen gas atmosphere to make the hydrogen fully dissolve to get the hydrogen-reduced food with strong reducing ability against decaying.

In addition, if the unprocessed food (raw tea for black tea) and fine particles are absorbed to the inside of the cap, first fill the water and flavoring liquid such as milk or sand sugar, etc. into the highly airtight vessel, purge and cap the vessel at the same time. At the heat sterilization stage, the boiling water or milk or sand sugar, etc. is mixed with raw tea. The unprocessed food (raw tea for black tea) not only can be extracted from the enclosed vessel in the capping state but also be seasoned. Besides, if the processed food (black tea) absorbed to the inside of the cap, as the extracted tea water can't be easily absorbed to the cap, it will be freeze-dried into powder or granulates and together with carbon fine particles absorbed to the inside of the cap. In this way, if the above black tea water has been seasoned, then only fill the water, flavoring liquids such as milk or sand sugar, etc. into the highly airtight vessel, and mix and season them at the heat sterilization stage. In addition, if the unprocessed food (wine) to be adsorbed to the inside of the cap, the adsorption is also not easy. The food extract will be freeze-dried into powder or granulates to be absorbed to the inside of the cap. Fill the alcoholics into the highly airtight vessel, and purge and cap the vessel at the same time. At the heat sterilization stage, the food is mixed with the above alcoholics, and the extract absorbed to the inside of the cap dissolve, and the alcoholic component's seasoning can be prepared. For the non-extracted beverage like wine, consider the freeze-drying due to difficult adsorption, but if the cap is made into the construction which makes it possible to absorb the liquid directly, it can absorb the liquid too.

The inventions described in Claim 5 and Claim 6 include that, the carbon fine particles and the flavorings in addition to the processed or unprocessed food are absorbed to the inside of the cap. In this case the water or alcoholics or other flavoring liquid originally expected to be filled into the highly airtight vessel in advance and the flavorings expected to be absorbed to the inside of the cap can be classified as required. For example, the processed food is prepared before capping, but if hope to treat its taste or aroma at the final stage, in such a case, to attach the flavorings of this class to the cap, and after capping, mix them with the food at the heat sterilization stage. On the other hand, if the unprocessed food is not prepared before capping, it needs flavor treating even more. For this reason, can fill the flavoring liquid such as soy sauce, etc. into the highly airtight vessel, or attach these flavorings to the inside of the cap.

In the invention as described in Claim 7 , the prepared dry food is absorbed to the inside of the cap. As it is the dried in the preparing state, the highly airtight vessel can be enclosed with this cap directly. That means, as the processed dry food is absorbed to the inside of the cap and usually eaten in dry state, it needn't special storage tank nor the filling operation into the highly airtight vessel. The prepared dry food, for example, dry beef, dry pineapple, etc., is dried after flavor treating. After making them absorbed to the inside of the cap, can purge and cap the vessel with the above cap at the same time. Because both the carbon fine particles and food are enclosed in the hydrogen gas atmosphere, we can get the hydrogen-reduced food fully absorbing the hydrogen with strong reducing capacity against decaying.

The invention described in Claim 8 is about the cap used in Claim 1. The cap of the highly airtight vessel is absorbed with a large quantity of carbon fine particles inside in advance. After capping, the hydrogen can fully dissolve into the beverage or food enclosed in the highly airtight vessel. The result is: the absorbed carbon fine particles in large quantities can be delivered to the deep part of the intestinal tract. The carbon fine particles won't be digested and assimilated by the intestine and finally excreted with stool, harmless to the human body. Besides, there are not only the screw-type cap, tin can winding-up cap, etc., but also other caps for all the vessels in which the food is filled and enclosed.

The invention described in Claim 9 is about the cap used in Claim 8. The cap of the highly airtight vessel has the construction that can absorb, besides the carbon fine particles, the processed or unprocessed food or flavorings or both processed/unprocessed food and flavoring, so all of the carbon fine particles and the processed/unprocessed food and flavoring can fully absorb a large quantity of hydrogen, and the food enclosed in the highly airtight vessel can absorb sufficient hydrogen even more and let the hydrogen dissolve in it. Besides, after the carbon fine particles absorbing a large quantity of hydrogen is eaten, the hydrogen can be delivered to the deep part of the intestinal tract and reduce and neutralize the active oxygen in the intestinal tract. In addition to the above, as the food conventionally needs to be heated for preparing before being filled into the vessel, which will result in the acidifying of the food and weakening its taste, by using the cap described in this invention, the preparing of the food can be done by heat sterilization after the capping of the vessel, thereby omitting the conventional heat seasoning and get an epoch-marking result. Moreover, the food can be prepared in the oxygen-free state, which can provide the unprecedented taste.

In the invention described in Claim 10, to make the flavoring absorbed to the inside of the cap and the above-mentioned processed or unprocessed food in freeze-drying state into the construction attached to the inside of the cap together with the carbon fine particles will increase the cap's adhesive force. Additionally, to mix and freeze-dry the flavoring or processed or unprocessed food and carbon fine particles, can also combine the starch or glucide and attach them to the inside of the cap. Also, the food bag or filtering package, etc. containing the food, can be set inside the cap. It is also possible to make the construction keeping the food inside the cap.

### [Best configuration for implementing this invention]

Below are the illustrative examples of the capping methods for getting the hydrogen-reduced water or hydrogen-reduced food and the caps of this invention.

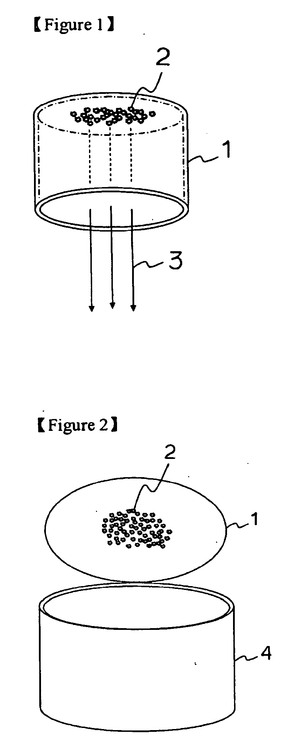

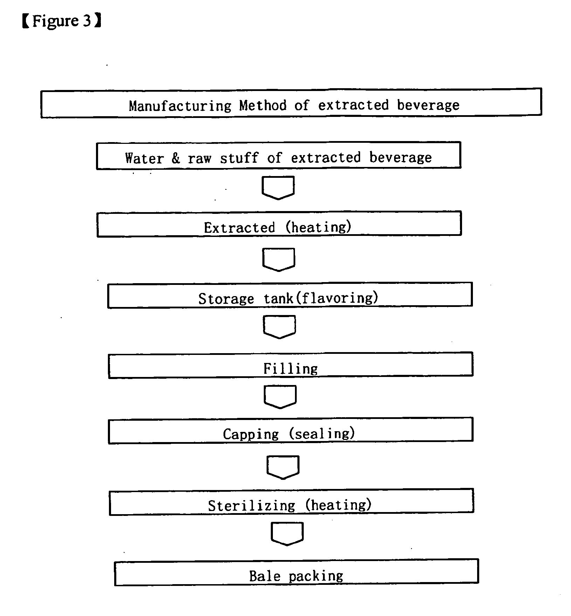

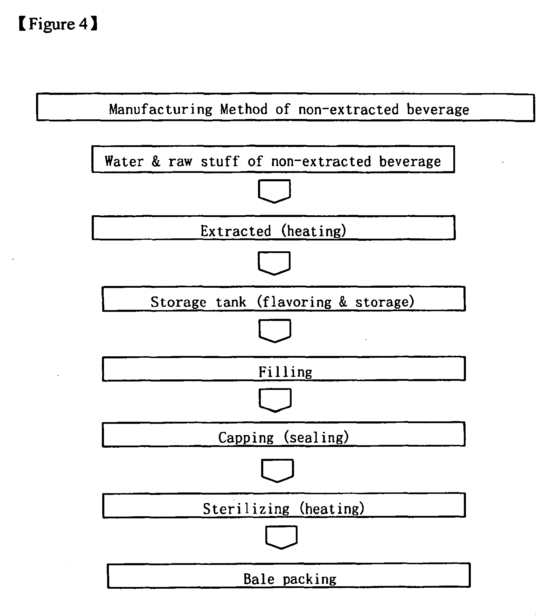

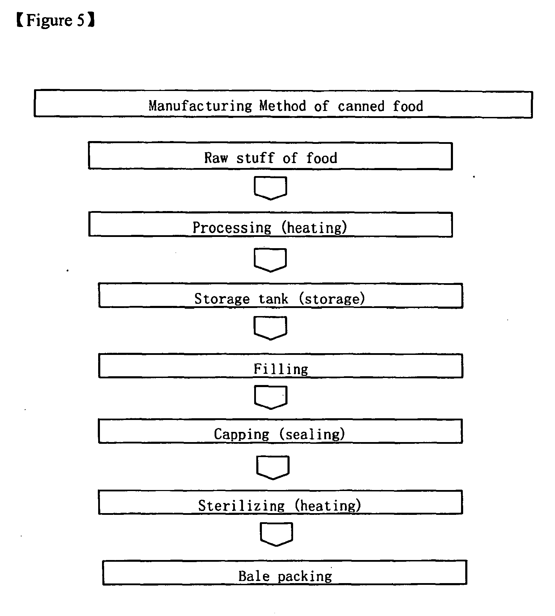

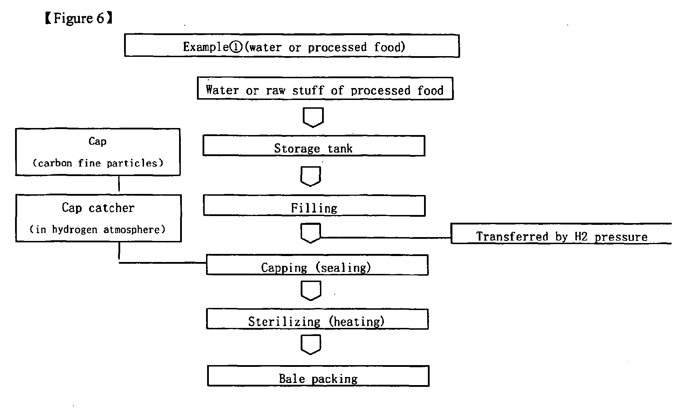

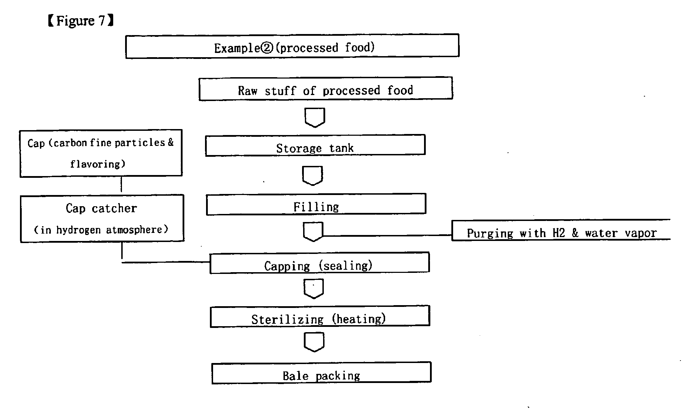

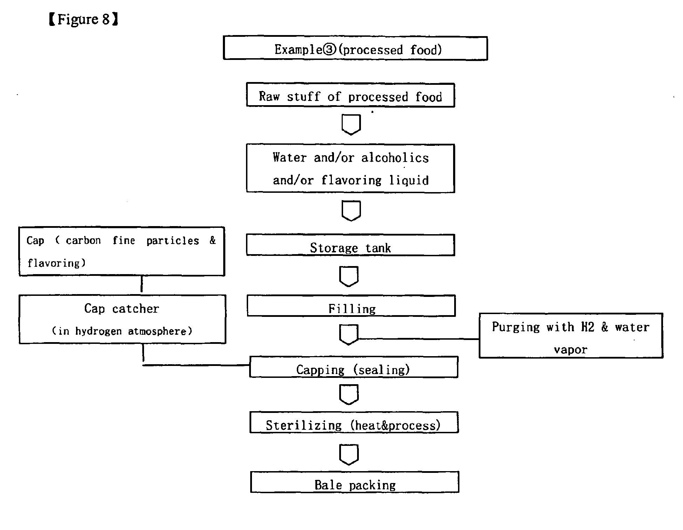

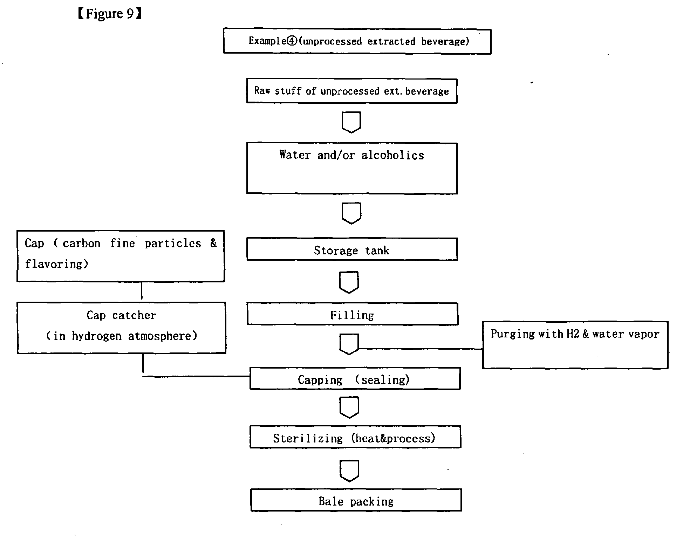

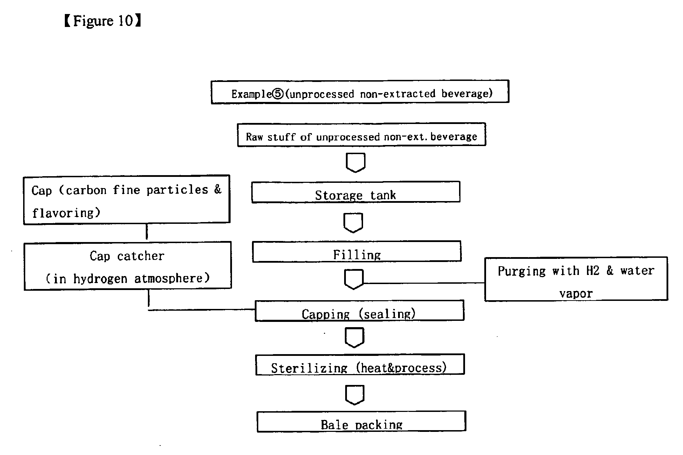

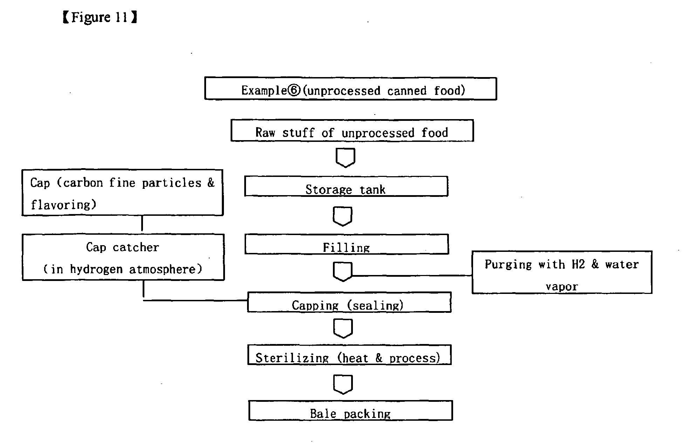

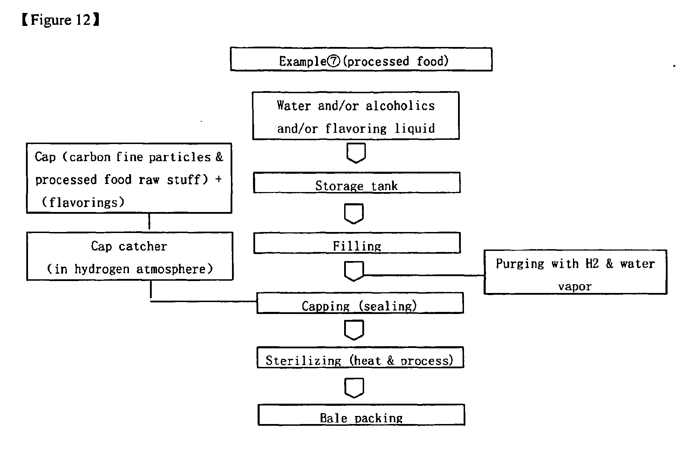

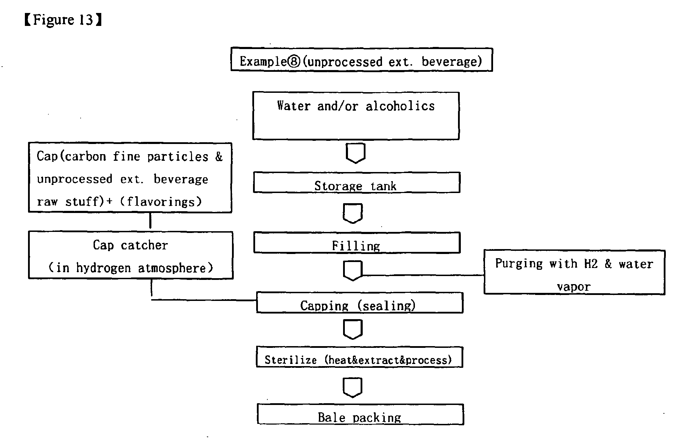

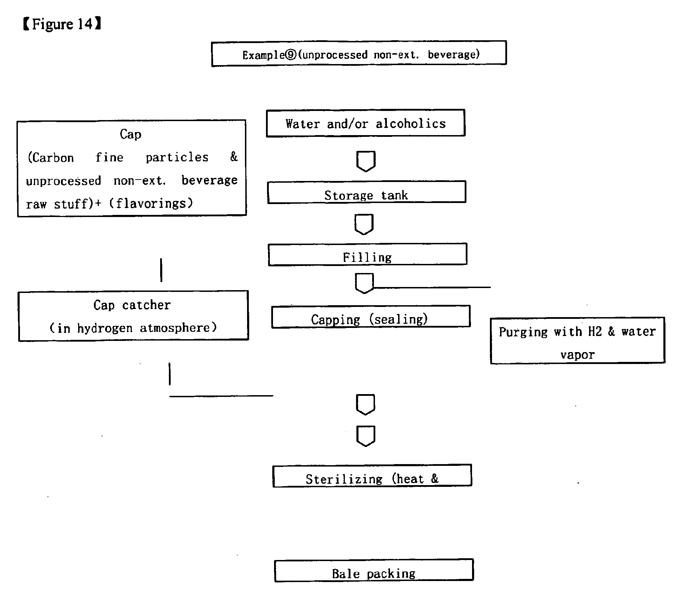

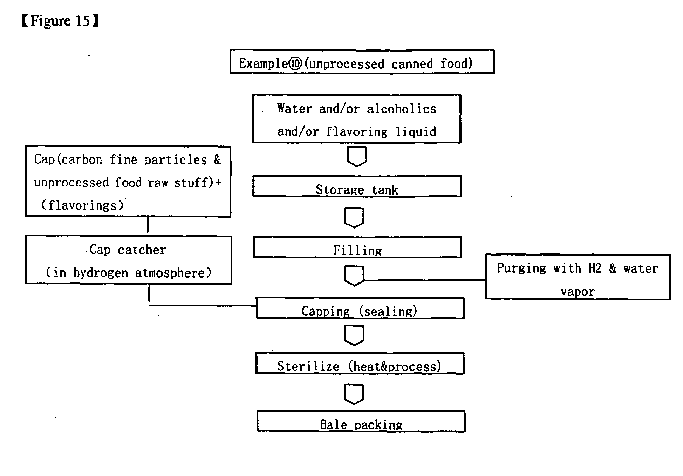

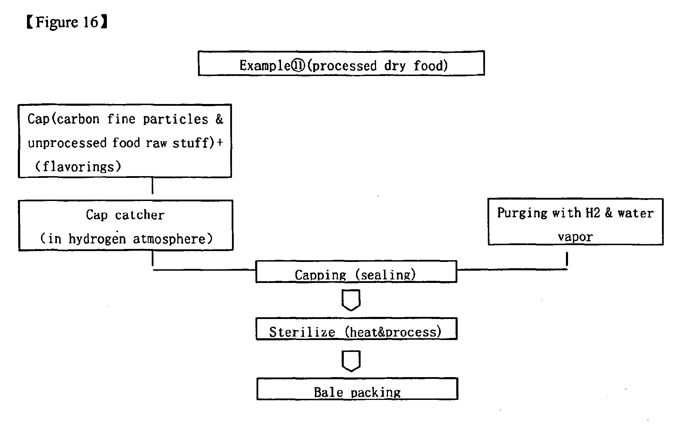

Figure 1 is the illustrative example of the cap for bottle described in Claim 8 or Claim 9 of this invention. Figure 2 is the illustrative example of the cap for can described in Claim 8 or Claim 9 of this invention. Figure 3 is the general manufacturing flow diagram for the extracted beverage. Figure 4 is the general manufacturing flow diagram for the non-extracted beverage. Figure 5 is the general manufacturing flow diagram for canned food. Figure 6 is the example flow diagram for the hydrogen reduced food as water or processed food with capping method described in Claim 1 to Claim 3 of this invention. Figure 7 is the example flow diagram for the hydrogen-reduced food as processed food with the capping method described in Claim 4 of this invention. Figure 8 is the example flow diagram for the hydrogen-reduced food as processed food with the capping method described in Claim 3 of this invention. Figure 9 is the example flow diagram for the hydrogen-reduced food as unprocessed non-extracted beverage with the capping method described in Claim 3 of this invention. Figure 10 is the example flow diagram for the hydrogen-reduced food as unprocessed non-extracted beverage with the capping method described in Claim 4 of this invention. Figure 11 is the example flow diagram for the hydrogen-reduced food as unprocessed canned food with the capping method described in Claim 3 of this invention. Figure 12 is the example flow diagram for the hydrogen-reduced food as processed food with the capping method described in Claim 5 or Claim 6 of this invention. Figure 13 is the example flow diagram for the hydrogen-reduced food as unprocessed extracted beverage with the capping method described in Claim 5 or Claim 6 of this invention. Figure 14 is the example flow diagram for the hydrogen-reduced food as unprocessed non-extracted beverage with the capping method described in Claim 5 or Claim 6 of this invention. Figure 15 is the example flow diagram for the hydrogen-reduced food as unprocessed canned food with the capping method described in Claim 5 or Claim 6 of this invention. Figure 16 is the example flow diagram for the hydrogen-reduced food as processed dry food with the capping method described in Claim 7 of this invention.

The terms in this invention are defined as follows:
(1) Water: include tap water and sterilized water
(2) Food: all the food such as beverage (include alcoholic beverage) , diet meat, vegetable, fruit, etc.
(3) Extracted beverage: beverages extracted from plant such as green tea, black tea, oolong tea, coffee, etc.
(4) Non-extracted beverage: beverages not extracted from the plant such as wine, beer, carbonated water, fruit juice beverage, sports drinks, etc.
(5) Flavorings: all the stuff for flavoring, seasoning, and blending the food (including beverages)
(6) Preparing, processing and cooking: flavor-treat and season (include extract, sear, feed proportioning) the food (including beverage)
(7) Flavoring liquid: flavorings in liquid
(8) Fill: add the processed or unprocessed food, water, alcoholics, flavoring liquid, etc. into the vessel
(9) Jar: means storage jar for mixing the ingredients when need to process the food, and storage tank for the food that needn't seasoning or has been seasoned
(10) Upper space and upper port part: the space formed above the food, water, alcoholics, flavoring liquid filled in the vessel
(11) Carbon: include all the carbon's allotropes

### Cap

Firstly, Figure 1 and Figure 2 represent the examples of the invention described in Claim 8 or Claim 9. Figure 1 shows the bottle cap while Figure 2 shows the can cap. In this invention, what is filled in the vessel is the hydrogen-reduced water or hydrogen-reduced food, so the cap for the aluminum highly airtight vessel such as aluminum packaging bag or aluminum tin can, etc. is used. The can cap is also included in the idea of this invention. Although its form is not limited, its inner side opposite to the food will adsorb carbon fine particles when sealing or capping. The fine particles made of carbon allotropes, including the active carbon, are designed for the above carbon fine particles. Generally, 1g active carbon's surface area is 1000 to 2500 square meters, which can absorb 1000 to 2000 ml hydrogen under normal condition. The cap as described in Claim 8 can be classified into two forms: 1. Loading into the cap catcher in hydrogen atmosphere in advance for the carbon fine particles to adsorb the hydrogen. 2. After the vessel is capped with food inside, the carbon fine particles adsorb the hydrogen. For the hydrogen adsorption after the capping of the vessel, when purging the air inside the vessel, except the hydrogen gas blown in, the hydrogen in the air or the hydrogen in the water may be absorbed to the carbon fine particles. In this invention, the hydrogen is much more absorbed to the carbon fine particles than dissolved in the water or food so it can remove off the active oxygen in the intestinal tract more effectively and contribute more in this regard. As mentioned above, the carbon fine particles adsorb a large quantity of hydrogen under the normal condition. Because they absorb the purging hydrogen or the hydrogen released from the water or food in the capped vessel, we can use the hydrogen in the air or water for capping and it's not necessary to specify the capping by loading into the cap catcher in the hydrogen atmosphere. Besides, as represented in the form of particle in the figure, in which, same as Claim 9, it still includes flavoring, processed or unprocessed food except carbon fine particles. The flavoring includes all the stuff for preparing, seasoning, and blending. Besides, the food includes all the food stuffs except the water , such as beverage, meat, vegetable, fruit, etc. The processed food includes beverages and all the foods that have been seasoned or flavor treated. The onprocessed food includes beverages and all the foods not seasoned or flavor treated. When attaching the prepared food or unprepared food to the inside of the cap, because the attachment is difficult, except by means of freeze-drying, it is also possible to design the inner side of the cap into the construction for fixing the food easily, or design the supoort for putting the food like the tea in the packaging bag or filter bag in advance and releasing it after being filled into the vessel.

### Preparation of the extracted beverage

Figure 3 is the general manufacturing flow diagram for the extracted beverage. Extracted beverages are made by the extract taken from the tea leaves or beans, including the green tea, black tea, oolong tea, coffee, etc. For the extracted beverage, mix the raw stuff of the extracted beverages like tea or coffee, etc., except the water, and then draw out the extract by heating. The extracted beverage after extracted is mixed with milk or sand sugar, etc. in the feed proportioning (blending) storage jar, and then filled into the vessel, and after that, cap the vessel and heat and sterilize each vessel before bale packing and shipping. In the conventional production process of the extracted beverage, must finish two operations: heating the extract and heat sterilization, both of which acidify the food and weaken its taste and make it decay.

### Preparation of the non-extracted beverage

Figure 4 is the general manufacturing flow diagram for the non-extracted beverage. Non-extracted beverages include fruit beverage, wine, soda pop, sports drinks, etc., which can't be made by drawing out the extract. There are a great variety of non-extracted beverages without a general manufacturing method. Here we presume that the non-extracted beverage refers to raw stuff before the blending operation. For example, in case of orange juice, it is squeezed from the orange and is the raw stuff without blending with the sugar syrup, etc. In case of wine, it is brewed and is the raw stuff without blending with the alcohol. Firstly, mix the raw stuff of the non-extracted beverage with the sand sugar or alcohol, etc. in the feed proportioning (blending) jar and prepare before storage. Then fill it into the vessel via filler and after that, cap the vessel. Then heat and sterilize each vessel before bale packing and shipping. From the above, the conventional non-extracted beverage production process has no heating operation as mentioned above in the extraction, but it's necessary to heat when blending the raw stuff in the feed proportioning (blending) storage tank and the acidification can't be avoided in blending.

### General preparing method of canned food

Figure 5 is the general manufacturing flow diagram for canned food. Here the canned food is the meat, vegetable, fruit, etc. except beverages. Firstly, prepare the raw stuff for such food and then season and store it. For the stored processed food, determine its contents and then fill it into the vessel and then cap the vessel. After capping, heat and sterilize each vessel before bale packing and shipping. From the above, in the preparing and the sterilizing of the food, must heat the food in these two operations. It is the reason for the acidifying and decaying of the food and weakening its taste.

### Example 1

Figure 6 is the example flow diagram for the hydrogen-reduced food as water or processed food with capping method as described in Claim 1 to Claim 3 of this invention. Claim 1 is about the capping method for getting the hydrogen-reduced water or hydrogen-reduced food while Claim 2 is about the capping method for getting the hydrogen-reduced processed food. The processed food means all the process extracted beverages and non-extracted beverages, and includes the canned foods such as meat, vegetable, fruit, etc. In these cases, only carbon fine particles are attached to the inside of the cap and the cap is loaded into the cap catcher in the hydrogen atmosphere. Also, the highly airtight vessel is filled with water or processed food. Generally, the water has been sterilized and the processed food has been prepared by seasoning and contains oil, vinegar, etc. In this invention, the carbon fine particles are attached to the inside of the cap and a plurality of caps are loaded into the cap catcher in the hydrogen atmosphere. Because the inside of the cap catcher is under high pressure and at ultra low temperature, the above-mentioned carbon fine particles adsorb a large quantity of hydrogen. The carbon fine particles to be attached to the inside of the cap are the carbon allotropes including the active carbon in the size from the micrometer to nanometer. The adsorption method includes but not limited to, mix the carbon fine particles with the starch and glucide harmless to the human body to make the stuff with binding property, and then spray the stuff onto the inside of the cap. Also, when capping the vessel, set the jet nozzle for blowing the hydrogen gas or water vapour or both into the upper port of the vessel, usually at the storage tank or beside the filling machine. Firstly, store the water or processed food in the storage tank and fill it into the highly airtight vessel via the filling machine. Once the water or processed food are filled into the vessel, the vessel is capped with the cap loaded into the cap catcher while from the above jet nozzle, blow in the hydrogen gas or water vapor or both into the upper port part of the vessel to purge the air off from there to drive out the oxygen. In the hydrogen atmosphere after purging, after the vessel is capped by the cap catcher, heat and sterilize each vessel before bale packing and shipping. As mentioned above, because a large quantity of carbon fine particles are attached to the inside of the cap, when capping, the above carbon fine particles will release the hydrogen into the water or processed food in the vessel and the hydrogen will be dissolved into the water or processed food. Besides, the heat sterilization will also speed up the release of the hydrogen absorbed on the carbon fine particles. In this way, in the oxygen-free state, it will facilitate the dissolution of the hydrogen into the water or processed food. As a result, we can get the hydrogen-reduced water or hydrogen-reduced food with the reducing ability exceeding -700mV from a point of hydrogen reduction potential. Further, as described in the Claim 3, as shown in Figure 6, the water or processed food in the storage tank is pressed into the filling machine by the pressure of the hydrogen gas, and before the above-mentioned purging or contacting the enclosed hydrogen, the water or processed food has just been put in the hydrogen atmosphere. In this way, for the water or all the processed food, at the stage of filling and capping of highly airtight vessel, we can get the hydrogen-reduced water or hydrogen-reduced food with very high content of dissolved hydrogen by means of the relevant engineering of this invention. When implementing this invention, only add the simple equipment to the conventional production line.

### Example 2

Figure 7 is the example flow diagram for the hydrogen-reduced food as processed food with the capping method described in Claim 4 of this invention. Claim 4 is applicable to all the processed or unprocessed food. Figure 7 is especially the example for the reduction of the processed food with the carbon fine particles and flavorings attached to the inside of the cap. Besides, on this occasion, the processed food means all the canned food, including all the extracted beverages after being processed, non-extracted beverages, meat, vegetables, fruits, etc. The major difference between Claim 4 and Claim 1 to Claim 3 is that besides the carbon fine particles, the flavorings are attached to the inside of the cap. The flavorings mean all the raw stuff for preparing, seasoning or proportioning for food, including oil, vinegar, sugar syrup, etc. The forms of the flavorings in this invention: for example, the sand sugar, pepper, etc. in powder or granulates, and they are mixed with the starch as the above-mentioned carbon particles do, and then absorbed to the inside of the cap. But both soy sauce and mirin are liquid and difficult to be absorbed so they are freeze-dried into powder or granulates and then mixed with the above-kneaded stuff and then absorbed to the carbon fine particles. However, it is possible to make the inside of the cap into the construction that can absorb the liquid without freeze-drying.
In the example of Figure 7, the food is the processed food that has been prepared by flavor treating, but need to be treated in taste or aroma at the end. To take the flavoring as desirable spices can meet the needs of this taste or aroma treatment. For example, the processed food is stewed vegetables, if hoping to enhance the aroma at the end, add the desirable spices as flavorings. To mix it with the stewed vegetables at the heat sterilization stage can finish the aroma treatment. Besides, if the processed food is coffee, if hoping to blend with milk at the end, absorb the freeze-dried milk as flavoring and mix them at the heat sterilizing stage to finish the taste treatment. In this working example, firstly store the processed food in the storage tank and fill it into the highly airtight vessel through filling machine and then cap with the above cap while purging with the hydrogen gas or water vapor of both blown from the jet nozzle at the upper port of the vessel to drive out the oxygen inside. The capping operation is in the hydrogen atmosphere and heat and sterilize each highly airtight vessel before bale packing and shipping. As mentioned above, because a large quantity of carbon fine particles are attached to the inside of the cap, after capping, the above carbon fine particles will release the hydrogen into the water or processed food in the vessel and the hydrogen will also be dissolved into the water or processed food. Besides, the flavorings are also attached to the inside of the cap except the carbon fine particles and via the cap catcher in the hydrogen atmosphere, the hydrogen is also dissolved into the flavoring to enhance the dissolution of the hydrogen in the food. So it is possible to use the cap attached with carbon fine particles and flavorings to make the processed food into the hydrogen-reduced food with high reducing ability. Besides, with the absorbed flavoring, we can finish the flavoring treatment in the heat sterilization.

### Example 3

Figure 8 is the example flow diagram for the hydrogen-reduced food as processed food with the capping method described in Claim 3 of this invention. Claim 3 is suitable for all the processed or unprocessed foods. Figure 8 is especially the working example for the hydrogen reduction of the processed food with the carbon fine particles and flavorings attached to the inside of the cap. It has the design of filling the water or alcoholics or one kind or more than two kinds of flavoring liquid into the highly airtight vessel. In this example, the processed food means all the prepared extracted beverages and non-extracted beverages as well as the canned foods of meat, vegetables, fruits, etc. and both the carbon fine particles and flavorings are attached to the inside of the cap. This example is same as example 2 except filling the water or alcoholics or one kind or more than two kinds of flavoring liquids into the highly airtight vessel. The food may need to make up the water or be seasoned although the food has been prepared. For example, in case of the processed crab meat, to enhance the taste, it's necessary to add flavoring liquid including the oil, etc. to make it taste better. Another example is the processed orange juice. If hoping to increase its sweetness, may add sugar syrup. This example is fit for the above two cases. In this example, firstly prepare the processed food and mix it with the water or alcoholics or one kind or more than two kinds of flavoring liquids and then store the mixture in the storage tank, then fill it into the highly airtight vessel via filling machine. As the above-mentioned process, purge the vessel while capping it with the cap attached with the carbon fine particles and flavorings inside in the cap catcher in the hydrogen atmosphere. Heat and sterilize each vessel before bale packing and shipping. In this example, the flavorings are attached to the inside of the cap. If hoping to treat the taste or aroma, attach the desirable flavorings to the inside of the cap in advance, and then mix the flavorings with the food at the heat sterilization stage to finish the taste and aroma treatment. In this way, other examples with the carbon fine particles and flavorings attached to the inside of the cap, in which the prepared food, water or alcoholics or one kind or more than two kinds of flavoring liquid are filled into the highly airtight vessel, can also make the processed food into the high quality hydrogen-reduced food with strong reducing ability. Besides, because of attached flavorings, at the heat sterilization stage, it's also possible to have the taste and aroma treatment.

### Example 4

Figure 9 is the example flow diagram for the hydrogen-reduced food as unprocessed non-extracted beverage with the capping method described in Claim 3 of this invention. Claim 3 is suitable for all the processed or unprocessed foods. Figure 9 is especially the example for the hydrogen reduced unprocessed extracted beverage with the carbon fine particles and flavorings adsorbed to the inside of the cap. To extract the beverage liquid, there should be the operation of filling the water or alcohol or one kind or more than two kinds of favoring liquids into the highly airtight vessel. Besides, unprocessed extracted beverage means the beverage not extracted or seasoned. For example, the unprocessed extracted beverage is oolong tea, which is not extracted or seasoned raw oolong tea. Then the extracted oolong tea water solution will be filled into highly airtight vessel. For example, the unprocessed extracted beverage is the oolong tea to be treated with alcoholics, which is likewise not extracted or seasoned. Then, to change the taste of the extracted oolong tea solution, need to fill the alcoholics, etc. into the highly airtight vessel. This example describes that the raw stuff of the unprocessed extracted beverage is mixed with water or alcohol and the mixture is stored in the storage tank. Then, the mixture is filled into the highly airtight vessel by the filling machine. By means as mentioned above, purge the vessel while capping with the cap attached with the carbon fine particles and flavorings inside in the cap catcher in the hydrogen atmosphere. Heat and sterilize each capped vessel before bale packing and shipping. Besides, according to this example, in the above-mentioned heating and sterilizing, the water or alcohol enclosed in the highly airtight vessel may boil, so the above tea will boil up for the first time and the oolong tea liquid is extracted. In the meantime, the flavorings adsorbed to the inside of the cap will also be blended so the seasoning operation is also done in the heating and sterilizing. The release of the hydrogen from the carbon will speed up due to heating and in the oxygen-free capping state, and a large quantity of hydrogen will be dissolved into the extracted beverage. Other results are as mentioned above. Especially, the conventional heating operation for extraction is omitted. This result should be noted.

### Example 5

Figure 10 is the example flow diagram for the hydrogen-reduced food as unprocessed non-extracted beverage with the capping method described in Claim 4 of this invention. As mentioned above, Claim 4 is suitable for all the processed or unprocessed foods. Figure 10 is especially the example for the hydrogen-reduced food as unprocessed non-extracted beverage with the carbon fine particles and flavorings attached to the inside of the cap. The unprocessed non-extracted beverages refer to the non-extracted beverages that are not seasoned such as wine, fruit beverage, carbonated water, sports drink, etc. without seasoning. For example, the unprocessed non-extracted beverage is the brewed wine. The alcohol content is adjusted but the taste not. The orange juice is the juice extracted from the orange but its taste not changed. As it is nearly finished as beverage, it's suitable for the cases in which the water, alcohol, etc. are not needed. This is not illustrated in the drawing. But it only needs the make-up water or alcohol or flavoring liquid operation before filling into the vessel. This is same as other examples. In this example, firstly, store the unprocessed non-extracted beverage in the storage tank and then fill it into the highly airtight vessel by the filling machine. Then, by the means as mentioned above, purge the vessel while capping it with the cap attached with carbon fine particles and flavorings inside in the cap catcher in the hydrogen atmosphere. Heat and sterilize each capped vessel before bale packing and shipping. Besides, in the heating and sterilizing process as mentioned above in this example, the wine or orange juice filled in the highly airtight vessel may boil up and mix with the flavorings attached to the inside of the cap. So it's possible to adjust the taste and flavor in the heating process. Other results are same as mentioned above.

### Example 6

Figure 11 is the example flow diagram for the hydrogen-reduced food as unprocessed canned food with the capping method described in Claim 3 of this invention. As mentioned above, Claim 3 is suitable for all the processed or unprocessed foods. Figure 11 is especially the example for the hydrogen-reduced food as unprocessed canned food with the carbon fine particles and flavorings attached to the inside of the cap. They have the filling operation of water or alcohol or one kind or more than two kinds of flavoring liquids into the highly airtight vessel. The unprocessed canned food refers to all the unprocessed foods except water and beverages such as meat, vegetables, fruits, etc. So the water or alcohol or one kind and more than two kinds of flavoring liquids for making of these foods are filled into the highly airtight vessel together. For example, the unprocessed food is crab meat. To season the crab meat, we need to fill the flavoring liquid like soy sauce, etc. and the water into the highly airtight vessel together. The boiled crab meat is also the unprocessed food in this invention. In this example, firstly, mix the unprocessed food raw stuff and water or alcohol or one kind or more than two kinds of the flavoring liquids and then store the mixture into the storage tank. Then fill it into the highly airtight vessel by the filling machine. Then, by the same means as mentioned above, cap the vessel with the cap attached with the carbon fine particles and flavorings inside in the cap catcher in the hydrogen atmosphere, and then heat and sterilize the vessel before bale packing and shipping. Besides, in the above-mentioned sterilizing & heating process, the water or alcohol or one kind or more than two kinds of flavoring liquids enclosed in the highly airtight vessel may boil up so the above food (crab meat) is cooked for the first time. In the meantime, the flavorings adsorbed to the inside of the cap will also be blended so the seasoning operation is also done in the heating and sterilizing. Other results are as mentioned above. Especially, the conventional heating operation for extraction is omitted. This result should be noted.

### Example 7

Figure 12 is the example flow diagram for the hydrogen-reduced food as processed food with the capping method described in Claim 5 of this invention. Claim 5 is applicable to all the processed or unprocessed food. Figure 12 is especially the example for the hydrogen reduced food as processed food with the carbon fine particles attached to the inside of the cap and water or alcohol or one kind or more than two kinds of flavoring liquids filled into the highly airtight vessel, i.e. as the water or alcohol or one kind of or more than two kinds of flavoring liquids are filled into the highly airtight vessel, the processed food and carbon fine particles are both absorbed to the inside of the cap. The processed food is the same as mentioned above, including all the processed extracted beverages and non-extracted beverages as well the canned food such as meat, vegetables, fruits, etc. For example, the processed food is seasoned crab meat. If hoping to enhance the taste and flavor, the flavoring liquid containing the oil will be filled into the highly airtight vessel. For example, the processed food is orange juice. If hoping to enhance sweet taste to the extracted orange juice, the sugar juice will be filled into the highly airtight vessel. This example is the same as the above-mentioned case. Besides, the processed food described in this example is adsorbed to the cap and can be freeze-dried due to the difficulty of the adsorption. In case of orange juice adsorbed to the inside of the cap, it is easy to freeze-dry it into powder and granulates. Therefore, can mix it with the kneaded stuff of starch or glucide ( mix and completely agitate) and then attach to the cap. For example, the crab meat is adsorbed. Although the crab meat is initially freeze dried, it is possible to make the inside of the cap into the construction capable of absorbing and retaining the food. The cap catcher is usually at high pressure and ultra low temperature. If the kneaded stuff is absorbed, the absorption is firm even for the crab meat. In this example, firstly, store the water or alcohol or one kind or more than two kinds of flavoring liquid into the storage tank and secondly fill them into the highly airtight vessel. Then cap with the above-mentioned cap. At this moment, the hydrogen gas or water vapor or both blown from the jet nozzle purge the upper space of the vessel to drive out the oxygen for capping the vessel in the protective hydrogen atmosphere state. After capping of the highly airtight vessel, heat and sterilize the food together the vessel before bale packing and shipping. In this way, the food enclosed in the highly airtight vessel as mentioned above, and the carbon fine particles attached to the inside of the cap adsorb a large quantity of hydrogen, and the hydrogen is released and dissolved into the processed food enclosed in the vessel. Besides, in this invention, in addition to carbon fine particles, the processed food is also absorbed to the inside of the cap, and the processed food also adsorbs the hydrogen by being loaded in the cap catcher. The purging of the vessel while capping it even more enhance the dissolving efficiency of the hydrogen into the food. As above, use the cap attached with carbon fine particles and processed food can manufacture the processed food into the hydrogen-reduced food with strong reducing capacity. In addition, as described in Claim 6, with the carbon fine particles and processed food and flavorings adsorbed to the inside of the cap, in the sterilizing & heating process, can have the final taste treatment.

### Example 8

Figure 13 is the example flow diagram for the hydrogen-reduced food as unprocessed extracted beverage with the capping method described in Claim 5 of this invention. Claim 5 is applicable to all the processed or unprocessed food. Figure 13 especially represents the example for the unprocessed extracted beverage with the hydrogen reduced food and carbon fine particles attached to the inside of the cap and the water or alcohol filled into the highly airtight vessel, i.e. as the water or alcohol is filled into the highly airtight vessel, both the unprocessed extracted beverage and carbon fine particles are adsorbed to the inside of the cap. The unprocessed extracted beverage, as mentioned above, is the stuff not extracted or seasoned. For example, the unprocessed extracted beverage is oolong tea, which is not extracted or seasoned raw oolong tea. Then the extracted oolong tea water solution will be filled into highly airtight vessel. For example, the unprocessed extracted beverage is the oolong tea to be treated with alcoholics, which is likely not extracted or seasoned. Then, to change the taste of the extracted oolong tea solution, need to fill the alcohols, etc. into the highly airtight vessel. The raw stuff of unprocessed extracted beverage adsorbed to the cap is as above. The general practice (but not limited to this) is to knead the tea and carbon fine particles with the starch or saccharide and to absorb them together. In this example, firstly store the water or alcohol into the storage tank. Then, after filling the highly airtight vessel by the filling machine, purge the vessel while capping it by the same means as above, and then cap with the cap attached with carbon fine particles and unprocessed extracted beverages in the cap catcher in the hydrogen atmosphere. Heat and sterilize the capped vessel before bale packing and shipping. Besides, according to this example, in the above sterilizing & heating process, the water or alcohol filled in the highly airtight vessel may boil up. Therefore the aforementioned tea is boiled for the first time and the oolong tea liquid is extracted in this process. Besides, in Claim 6, the flavoring also absorbed to the inside of the cap for the later mixing for final taste and flavor treatment possibly in the heating and sterilizing process. Other results are as mentioned above. Especially, the conventional heating operation for extraction is omitted. This result should be noted.

### Example 9

Figure 14 is the example flow diagram for the hydrogen-reduced food as unprocessed non-extracted beverage with the capping method described in Claim 5 of this invention. As mentioned above, Claim 5 is suitable for all the processed or unprocessed food. Figure 14 especially represents the example for the unprocessed non-extracted beverage with the hydrogen reduced food and carbon fine particles attached to the inside of the cap and the water or alcohol filled into the highly airtight vessel, i.e. as the water or alcohol is filled into the highly airtight vessel, both the unprocessed non-extracted beverage and carbon fine particles are adsorbed to the inside of the cap. As mentioned above, the unprocessed non-extracted beverages refer to the non-extracted beverages that are not seasoned such as wine, fruit beverage, carbonated water, sports drink, etc. without seasoning. For example, the unprocessed non-extracted beverage is the brewed wine. The alcohol content is adjusted but the taste not. The orange juice is the juice extracted from the orange but its taste not adjusted. However, the unprocessed non-extracted beverage in this example is absorbed to the inside of the cap and so does the wine juice or orange juice after made into powder or granulates. So it is necessary to fill the water or alcohol into the highly airtight vessel. In this example, firstly store the water or wine in the storage tank and then fill the highly airtight vessel by the filling machine. Then, purge the vessel while capping it by the same means as above with the cap attached with carbon fine particles and unprocessed non-extracted beverage inside in the cap catcher in the hydrogen atmosphere. Heat and sterilize the capped vessel before bale packing and shipping. Besides, according to this example, in the above sterilizing & heating process, the water or alcohol filled in the highly airtight vessel may boil up. The wine of orange juice in powder or granulates attached to the inside of the cap may boil up and cooked for the first time in this process. Besides, in Claim 6, the carbon fine particles and unprocessed non-extracted beverage and flavoring are absorbed to the inside of the cap, and the final taste and flavor treatment can be done in the sterilizing & heating process. This result should be noted. Other results are same as mentioned above.

### Example 10

Figure 15 is the example flow diagram for the hydrogen-reduced food as unprocessed canned food with the capping method described in Claim 5 of this invention. Claim 5 is applicable to all the processed or unprocessed food. Figure 15 is especially the example for the hydrogen reduced food as unprocessed canned food with the carbon fine particles attached to the inside of the cap and water or alcohol or one kind or more than two kinds of flavoring liquids filled into the highly airtight vessel, i.e. as the water or alcohol or one kind of or more than two kinds of flavoring liquids are filled into the highly airtight vessel, the unprocessed canned food and carbon fine particles are both absorbed to the inside of the cap. The unprocessed canned food refers to all the unprocessed foods except water or beverages such as meat, vegetables, fruits, etc. So the water or alcohol or one kind or more than two kinds of flavoring liquids for making these foods are filled into the highly airtight vessel. For example, to season the crab meat, the flavoring liquid such as soy sauce, etc. and water are filled into the highly airtight vessel. Besides, the crab meat is boiled and here also means unprocessed. In this example, firstly, store the water or alcohol or one kind or more than two kinds of flavoring liquid into the storage tank and secondly fill them into the highly airtight vessel by the filling machine. Then, by the same means as above, purge the vessel while capping with the cap attached with carbon fine particles and unprocessed canned food inside in the cap catcher in the hydrogen atmosphere. Heat and sterilize the capped vessel before bale packing and shipping. Besides, according to this example, in the above-mentioned sterilizing & heating process, the water or alcohol or one kind or more than two kinds of flavoring liquids enclosed in the highly airtight vessel may boil up so the above food(crab meat ) is cooked for the first time. Besides, in Claim 6, the carbon fine particles and unprocessed canned food and flavoring are absorbed to the inside of the cap and mixed together, and the final taste and flavor treatment can be done in the sterilizing & heating process. This result should be noted. Other results are same as mentioned above. Cooking the processed food in the sterilizing & heating process saves the conventional heating operation when cooking. This result should be noted.

### Example 11

Figure 16 is the example flow diagram for the hydrogen-reduced food as processed dry food with the capping method described in Claim 7 of this invention. Claim 7 is only suitable for the processed dry food. As the dry food can be eaten without cooking, it's not necessary to fill the water or alcohol or flavoring liquid into the vessel. So neither the storage tank for flavorings, water or alcohol or one kind and more than two kinds of flavoring liquids nor the filling machine for the highly airtight vessel is needed. The processed dry food means, for example, dry beef, dry pineapple, purple laver, etc., which has been cooked and can be eaten. The method of attaching these food to the inside of the cap includes: by freeze-drying the food, by filling the food into the netty plastic bag fixed in the inside of the cap, by making the inside of the cap into the construction capable of fixing the food, etc. As above, this example doesn't need the storage tank or filling machine so after the cap attached with the carbon fine particles and processed dry food inside is loaded into the cap catcher, only need to purge the upper space of the vessel while capping it.
After the food is capped in the highly airtight vessel, heat and sterilize the vessel before bale packing and shipping. Besides, the carbon fine particles and the processed dry food plus the flavoring are absorbed to the inside of the cap and so the final taste and flavor treatment can be done in the sterilizing & heating process. As mentioned above, the processed dry food capped in the vessel absorbs the hydrogen while the carbon fine particles release a large quantity of hydrogen into the vessel and so there is sufficient hydrogen.

The above are the main examples of this invention. As there are many kinds of extracted beverages, non-extracted beverages and canned foods, not all the processes are exactly the same as the illustrated ones. Besides, in this invention, after filling, purge the vessel with hydrogen gas or water vapor or both and seal with the cap as described. This is the characteristic of this invention. So the filling operation of the food, water, alcohol or flavoring liquids may not be exactly the same as the illustrated ones.

### [Possibility of industrial use]

This invention is about the capping method and its cap for the hydrogen-reduced water or hydrogen-reduced food production. The carbon fine particles absorbing the hydrogen are attached to the cap. After filling and capping the vessel, the hydrogen will be dissolved into the food. Besides, the carbon fine particles, flavorings, processed unprocessed food are attached to the cap, and in the heating & sterilizing process, the extraction or cooking can be finished, omitting the conventional extraction and heating when cooking. The result is remarkable. This result can be used in all the food production fields.

### [Description of the figures]

[Figure 1]
   Represent the example of the caps for bottle described in Claim 8 or Claim 9 of this invention.
[Figure 2]
   Represent the example of the caps for can described in Claim 8 or Claim 9 of this invention.
[Figure 3]
   Represent the flow diagram for the general manufacturing engineering for the extracted beverages.
[Figure 4]
   Represent the flow diagram for the general manufacturing engineering for the non-extracted beverages.
[Figure 5]
   Represent the flow diagram for the general manufacturing engineering for the canned food.
[Figure 6]
   Represent the example flow diagram for the hydrogen reduced food as water or processed food with capping method described in Claim 1 to Claim 3 of this invention.
[Figure 7]
   Represent the example flow diagram for the hydrogen-reduced food as processed food with the capping method described in Claim 4 of this invention.
[Figure 8]
   Represent the example flow diagram for the hydrogen-reduced food as processed food with the capping method described in Claim 3 of this invention.
[Figure 9]
   Represent the example flow diagram for the hydrogen-reduced food as unprocessed non-extracted beverage with the capping method described in Claim 3 of this invention.
[Figure 10]
   Represent the example flow diagram for the hydrogen-reduced food as unprocessed non-extracted beverage with the capping method described in Claim 4 of this invention.
[Figure 11]
   Represent the example flow diagram for the hydrogen-reduced food as unprocessed canned food with the capping method described in Claim 3 of this invention.
[Figure 12]
   Represent the example flow diagram for the hydrogen-reduced food as processed food with the capping method described in Claim 5 or Claim 6 of this invention.
[Figure 13]
   Represent the example flow diagram for the hydrogen-reduced food as unprocessed extracted beverage with the capping method described in Claim 5 or Claim 6 of this invention.
[Figure 14]
   Represent the example flow diagram for the hydrogen-reduced food as unprocessed non-extracted beverage with the capping method described in Claim 5 or Claim 6 of this invention.
[Figure 15]
   Represent the example flow diagram for the hydrogen-reduced food as unprocessed canned food with the capping method described in Claim 5 or Claim 6 of this invention.
[Figure 16]
   Represent the example flow diagram for the hydrogen-reduced food as processed dry food with the capping method described in Claim 7 of this invention.

### [Note]

1. Cap
2. Carbon fine particles or both carbon fine particles and flavorings or processed or unprocessed food or both processed and unprocessed food
3. Direction in which the hydrogen is released
4. Highly airtight vessel

## Claims

1. A method for capping a vessel containing water or food, which is **characterized in that**: a plurality of caps having carbon fine particles absorbed inside are loaded into a cap catcher in a hydrogen gas atmosphere; water or food delivered from a storage tank is filled into a highly airtight vessel by a filling machine; hydrogen gas or water vapor or both are blown into said vessel to purge the upper space inside the vessel; and said vessel is capped with said cap.

2. The method according to claim 1, wherein the food is processed food.

3. The method according to claim 1 or claim 2, wherein said water or food is pressed by the hydrogen gas into said filling machine from said storage tank.

4. The method according to claim 1 for capping a vessel containing processed or unprocessed,food, wherein said caps have absorbed inside carbon fine particles and flavoring.

5. The method according to claim 1, wherein said caps have absorbed inside carbon fine particles as well as processed food or unprocessed food; and water or one kind of alcoholic flavoring liquid or both are filled into said vessel.

6. The method according to claim 5, wherein in addition to said carbon fine particles and processed food or unprocessed food, other flavorings are absorbed on the inside of said cap.

7. The method according to claim 1, wherein said caps have absorbed inside carbon fine particle and processed dry food.

8. A cap having absorbed thereto carbon fine particles which are capable of absorbing hydrogen gas.

9. The cap according to claim 8 which in addition to carbon fine particles also has absorbed thereto processed food or unprocessed food or both processed and unprocessed food.

10. The method or cap according to any one of claims 4 to 7 and 9, wherein said flavoring and processed food or unprocessed food as well as said carbon fine particles in the freeze-dried state are all absorbed to the inside of the cap.

## Patentansprüche

1. Verfahren zum Versehen bzw. Verschließen eines Wasser oder Lebensmittel enthaltenden Gefäßes mit einem Deckel, **dadurch gekennzeichnet, dass**: mehrere Deckel, die feine Kohlenstoffpartikel besitzen, die innen absorbiert sind, in einen Deckelaufnehmer in einer Wasserstoffgasatmosphäre geladen werden; Wasser oder Lebensmittel, das bzw. die von einem Aufbewahrungsbehälter ausgegeben wird bzw. werden, durch eine Befüllungsmaschine in das hochgradig luftdichte Gefäß gefüllt wird bzw. werden; Wasserstoffgas und/oder Wasserdampf in das Gefäß geblasen werden, um den oberen Raum in dem Gefäß zu reinigen; und das Gefäß mit dem Deckel verschlossen wird.

2. Verfahren nach Anspruch 1, wobei die Lebensmittel verarbeitete Lebensmittel sind.

3. Verfahren nach Anspruch 1 oder Anspruch 2, wobei das Wasser oder die Lebensmittel durch das Wasserstoffgas aus dem Aufbewahrungsbehälter in die Befüllungsmaschine gepresst werden.

4. Verfahren nach Anspruch 1, um ein Gefäß, das verarbeitete oder unverarbeitete Lebensmittel enthält, mit einem Deckel zu versehen, wobei die Deckel feine Kohlenstoffpartikel und Aromastoffe innen absorbiert haben.

5. Verfahren nach Anspruch 1, wobei die Deckel innen feine Kohlenstoffpartikel sowie verarbeitete Lebensmittel oder unverarbeitete Lebensmittel absorbiert haben; und Wasser und/oder eine Art alkoholischer Aromaflüssigkeit in das Gefäß gefüllt werden.

6. Verfahren nach Anspruch 5, wobei zusätzlich zu den feinen Kohlenstoffpartikeln und den verarbeiteten oder unverarbeiteten Lebensmitteln andere Aromastoffe in dem Deckel absorbiert werden.

7. Verfahren nach Anspruch 1, wobei die Deckel innen feine Kohlenstoffpartikel und verarbeitete trockene Lebensmittel absorbiert haben.

8. Deckel, der feine Kohlenstoffpartikel absorbiert hat, die Wasserstoffgas absorbieren können.

9. Deckel nach Anspruch 8, der zusätzlich zu den feinen Kohlenstoffpartikeln außerdem verarbeitete Lebensmittel und/oder unverarbeitete Lebensmittel absorbiert hat.

10. Verfahren oder Deckel nach einem der Ansprüche 4 bis 7 und 9, wobei die Aromastoffe und die verarbeiteten Lebensmittel oder unverarbeiteten Lebensmittel sowie die feinen Kohlenstoffpartikel im gefriergetrockneten Zustand sämtlich in dem Deckel absorbiert sind.

## Revendications

1. Procédé pour capsuler un récipient contenant de l'eau ou des aliments, lequel est **caractérisé en ce que** : une pluralité de capsules ayant de fines particules de carbone absorbées à l'intérieur sont chargées dans un récepteur de capsules dans une atmosphère de gaz d'hydrogène ; de l'eau ou des aliments délivrés depuis une cuve de stockage viennent remplir un récipient hautement étanche à l'air par l'intermédiaire d'une machine de remplissage ; du gaz d'hydrogène ou de la vapeur d'eau ou les deux sont retenus dans ledit récipient pour purger l'espace supérieur à l'intérieur du récipient ; et ledit récipient est capsulé à l'aide de ladite capsule.

2. Procédé selon la revendication 1, dans lequel les aliments sont des aliments traités.

3. Procédé selon la revendication 1 ou la revendication 2, dans lequel ladite eau ou lesdits aliments sont pressés par le gaz d'hydrogène dans ladite machine de remplissage depuis ladite cuve de stockage.

4. Procédé selon la revendication 1 pour capsuler un récipient contenant des aliments traités ou non traités, dans lequel lesdites capsules ont absorbé à l'intérieur de fines particules de carbone et un aromatisant.

5. Procédé selon la revendication 1, dans lequel lesdites capsules ont absorbé à l'intérieur de fines particules de carbone ainsi que des aliments traités ou des aliments non traités ; et de l'eau ou un type de liquide ayant un arôme d'alcool ou les deux viennent remplir ledit récipient.

6. Procédé selon la revendication 5, dans lequel en plus desdites fines particules de carbone et des aliments traités ou des aliments non traités, d'autres aromatisants sont absorbés à l'intérieur de ladite capsule.

7. Procédé selon la revendication 1, dans lequel lesdites capsules ont absorbé à l'intérieur de fines particules de carbone et des aliments secs traités.

8. Capsule ayant absorbé dans celle-ci de fines particules de carbone lesquelles sont capables d'absorber du gaz d'hydrogène.

9. Capsule selon la revendication 8 laquelle en plus des fines particules de carbone absorbe également des aliments traités ou des aliments non traités ou à la fois des aliments traités et des aliments non traités.

10. Procédé ou capsule selon l'une quelconque des revendications 4 à 7 et 9, dans lequel ledit aromatisant et lesdits aliments traités ou lesdits aliments non traités ainsi que lesdites fines particules de carbone dans l'état lyophilisé sont tous absorbés à l'intérieur de la capsule.
